# EUROPEAN PATENT SPECIFICATION

(11) **EP 3 171 565 B1**
(45) Date of publication and mention of the grant of the patent: **25.09.2019**
(21) Application number: 14881550.9
(22) Date of filing: 17.10.2014
(51) Int. Cl.: H04L 29/08, H04L 29/06, H04L 12/24, H04L 12/26

(54) **METHODS, DEVICES AND SYSTEM FOR NETCONF HELLO PACKETS INTERACTION**
VERFAHREN, VORRICHTUNGEN UND SYSTEM ZUR NETCONF-BASIERTE INTERAKTION DURCH HELLO-PAKETE
PROCÉDÉS, DISPOSITIFS ET SYSTÈME D'INTERACTION DE PAQUETS NETCONF HELLO

(30) Priority: 18.07.2014 CN 201410345004
(43) Date of publication of application: 24.05.2017
(73) Proprietor: ZTE Corporation, Shenzhen, Guangdong 518057 (CN)
(72) Inventor: YE, Xu, Shenzhen Guangdong 518057 (CN); FENG, Chong, Shenzhen Guangdong 518057 (CN)
(74) Representative: Brevalex
(86) International application number: PCT/CN2014/088832
(87) International publication number: WO 2015/117365

(56) References cited:
- CN-A- 101 459 506
- CN-A- 103 118 027
- US-A1- 2003 016 819
- US-A1- 2003 226 017
- US-A1- 2008 077 790
- US-A1- 2009 154 374
- BIERMAN YUMAWORKS A ET AL: "NETCONF Efficiency Extensions; draft-bierman-netconf-efficiency-extension s-00.txt", NETCONF EFFICIENCY EXTENSIONS; DRAFT-BIERMAN-NETCONF-EFFICIENCY-EXTENSION S-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2013 (2013-10-19), pages 1-76, XP015095441, [retrieved on 2013-10-19]
- ENNS R ET AL: "Network Configuration Protocol (NETCONF); rfc6241.txt", NETWORK CONFIGURATION PROTOCOL (NETCONF); RFC6241.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 June 2011 (2011-06-30), pages 1-113, XP015076061, [retrieved on 2011-06-30]
- CHISHOLM NORTEL H TREVINO CISCO S: "NETCONF Event Notifications; draft-ietf-netconf-notification-11.txt", NETCONF EVENT NOTIFICATIONS; DRAFT-IETF-NETCONF-NOTIFICATION-11.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. netconf, no. 11, 11 November 2007 (2007-11-11), XP015053645,

## Description

### TECHNICAL FIELD

The disclosure relates to a Network Configuration (NETCONF) management technology, and more particularly to a HELLO message interaction method, equipment and system and a computer storage medium.

### BACKGROUND

A NETCONF protocol is a protocol which provides network data equipment configuration management, and transmits data and protocol information by virtue of an eXtensive Markup Language (XML). According to a specification of the NETCONF protocol, when a link is established between a client and a server, the two parties are required to send HELLO messages to the opposite ends; and moreover, besides including capabilities supported by the server, the HELLO message sent to the client by the server is also required to include related information of all service modules supported by the server.

However, along with development of a network technology, there are many pieces of large-sized network equipment of a server at present, service modules supported by them are finely divided, which causes the condition that there are a relatively larger number of service modules supported by the network equipment, and each piece of network equipment of the server may usually support hundreds or thousands of service modules. Correspondingly, excessive service modules may also cause increase of an amount of related information of the service modules. Therefore, a length of a HELLO message configured for the server to establish a link with a client may be very large.

When a length of a HELLO message exceeds a maximum message length supported by client equipment, the HELLO message of a server may be failed to be sent, then a failure in establishing a link based on the NETCONF protocol between a client and the server will be caused, thereby causing the problem of relatively lower success rate of NETCONF-protocol-based link establishment between the client and the server.

Document "BIERMAN YUMAWORKS A ET AL: 'NETCONF Efficiency Extensions; draft-bierman-netconf-efficiency-extensions-OO.txt', NETCONF EFFICIENCY EXTENSIONS; DRAFT-BIERMAN-NETCONF-EFFICIENCY-EXTENSIONS-00.TXT, INTERNET ENGINEERING TASK FORCE, IETF; STANDARDWORKINGDRAFT, INTERNET SOCIETY (ISOC) 4, RUE DES FALAISES CH-1205 GENEVA, SWITZERLAND, 19 OCTOBER 2013, pages 1-76, XP015095441" discloses that capability-id capability is used by the client to request an abbreviated <hello> message instead of a full <hello> message from the server. Client keeps a cache of server capability sets; client sends <hello> with "capability-id" <capability> set to the cached value; server waits a small interval for the client <hello>, it will send either a full <hello> or an abbreviated <hello>; client <hello> received in time and it contains a capability-id value that matched the server's current value; the server sends an abbreviated <hello> with just 2 <capability> URTs; the client gets the server <hello> and sees that it has a capability-id value and it matches the value that was sent by the client. It determines the server returned an abbreviated <hello> and uses the cached capability set. The server will slightly delay sending its <hello> message to attempt to process the client <hello> first. If the client <hello> is received, and "capability-id" URI is found and matches the server value, then an abbreviated server <hello> message is sent instead of a full <hello> message.

### SUMMARY

Embodiments of the disclosure provide a HELLO message interaction method, equipment and system and a computer storage medium, which avoid a HELLO message sending failure of a server, thereby increasing a success rate of NETCONF-protocol-based link establishment between a client and the server.

The scope of the invention is defined in the appended claims.

The embodiments of the disclosure provide the HELLO message interaction method, equipment and system and the computer storage medium. The information of the service modules supported by the server is not born in the HELLO message sent by the server, and instead, the information of the service modules of the server is independently sent according to a specific request of the client, so that a HELLO message sending failure of the server is avoided, and a success rate of NETCONF-protocol-based link establishment between the client and the server is further increased.

### BRIEF DESCRIPTION OF THE DRAWINGS

Fig. 1 is a flowchart of a HELLO message interaction method according to an embodiment of the disclosure;
Fig. 2 is a flowchart of another HELLO message interaction method according to an embodiment of the disclosure;
Fig. 3 is a flowchart of another HELLO message interaction method according to an embodiment of the disclosure;
Fig. 4 is a flowchart of another HELLO message interaction method according to an embodiment of the disclosure;
Fig. 5 is a schematic diagram of a method for determining whether to send an acquisition request to a server by a client according to an embodiment of the disclosure;
Fig. 6 is a detailed flowchart of a NETCONF-protocol-based HELLO message interaction method according to an embodiment of the disclosure;
Fig. 7 is a schematic diagram of a content of a first HELLO message according to an embodiment of the disclosure;
Fig. 8 is a schematic diagram of a content of an acquisition request message according to an embodiment of the disclosure;
Fig. 9 is a schematic diagram of a message format of information of service modules sent to a client by a server according to an embodiment of the disclosure;
Fig. 10 is a structure diagram of server equipment according to an embodiment of the disclosure;
Fig. 11 is a structure diagram of another piece of server equipment according to an embodiment of the disclosure;
Fig. 12 is a structure diagram of client equipment according to an embodiment of the disclosure;
Fig. 13 is a structure diagram of another piece of client equipment according to an embodiment of the disclosure; and
Fig. 14 is a structure diagram of a HELLO message interaction system according to an embodiment of the disclosure.

### DETAILED DESCRIPTION

The technical solutions in the embodiments of the disclosure will be clearly and completely described below with reference to the drawings in the embodiments of the disclosure.

A basic idea of the disclosure is that: one interaction between a client and a server in a related technology is implemented by two interactions between the client and the server on the basis of the concept of replacement of space with time, that is, in the first interaction, a HELLO message sent by the server does not carry the server's supported information of service modules, and instead, the information of the service modules supported by the server is sent to the client in the second interaction according to a specific request of the client, so that not only may a HELLO message sending failure of the server be avoided to further increase a success rate of NETCONF-protocol-based link establishment between the client and the server, but also network resource consumption in message transmission is reduced.

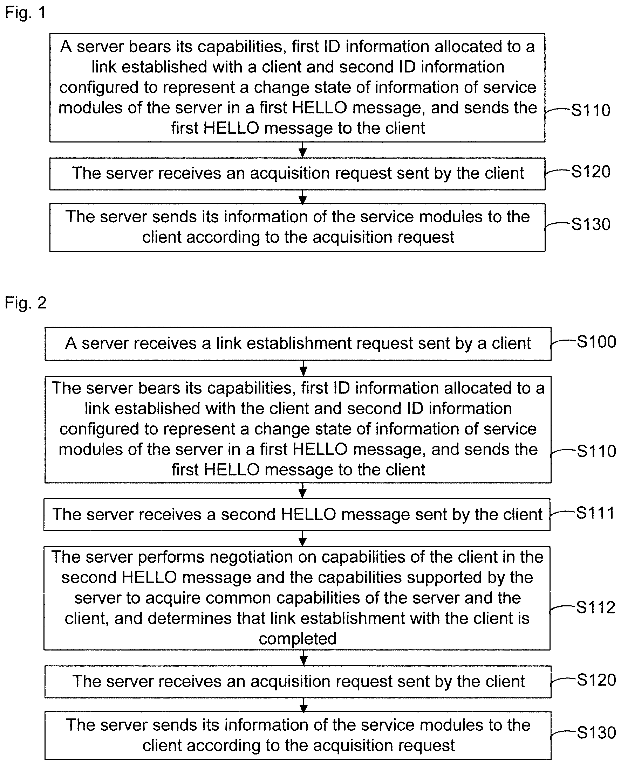

Referring to Fig. 1, a flow of a NETCONF-protocol-based HELLO message interaction method provided by the embodiment of the disclosure is shown. The method may be applied to a server in a network, and the server in the embodiment may be, listed but not limited to, an instant messaging server, a cloud server, a virtual server or other service equipment, which is not limited in the embodiment of the disclosure, and the server is required to meet a NETCONF protocol. The method may include S110, S120 and S130, wherein
S110: a server bears its capabilities, first ID information allocated to a link established with a client and second ID information configured to represent a change state of information of service modules of the server in a first HELLO message, and sends the first HELLO message to the client.

Exemplarily, in the related technology, the HELLO message sent by the server is required to include information of service modules of the server. However, the first HELLO message in the embodiment of the disclosure does not bear the information of the service modules of the server, and instead, the second ID information configured to represent the change state of the information of the service modules of the server is added to the first HELLO message.

In such a manner, a length of the first HELLO message in the embodiment of the disclosure is far smaller than a length of the HELLO message sent by the server in the related technology, so that the condition that the HELLO message of the server is failed to be sent due to the fact that the HELLO message of the server exceeds a maximum message length of client equipment may be avoided, and a success rate of NETCONF-protocol-based link establishment between the client and the server is increased.

The second ID information may reflect whether the information of the service modules of the server is changed or not. For example, when the information of the service modules of the server is changed, the second ID information is also correspondingly changed, and corresponds to the changed information of service modules of the server.

Preferably, in the embodiment, the second ID information may be a check code corresponding to the information of the service modules of the server, and the check code may be obtained by performing calculation on the information of the service modules of the server through a check code algorithm. Therefore, when the information of the service modules of the server is changed, the check code corresponding to the information of the service modules of the server is also correspondingly changed. It is important to note that a common check code algorithm may include a Hash algorithm such as a Message Digest Algorithm 5 (MD5) and a Secure Hash Algorithm (SHA), and may also include another check code algorithm, which is not specifically limited in the embodiment of the disclosure.

S120: the server receives an acquisition request sent by the client.

Exemplarily, the sending of the acquisition request is determined by the client according to the second ID information.

Optionally, the acquisition request may include a capability identifier of the client's capability for acquisition of the information of the service modules of the server, and the capability identifier represents that the client has a capability of acquiring the information of the service modules of the server, may usually be represented by an operation instruction of the client's capability for acquisition of the information of the service modules of the server, and is configured to trigger the server to send its information of the service modules to the client.

Optionally, the acquisition request may include the capability identifier of the client's capability for acquisition of the information of the service modules of the server and identifiers of service modules required to be acquired by the client, wherein the identifiers of the service modules required to be acquired by the client may be configured for the server only to send the information of the service modules corresponding to the identifiers of the service modules required to be acquired by the client to the client, so that it is unnecessary to send all of the information of the service modules of the server to the client, and network resource consumption in sending the information of the service modules may be reduced.

It is important to note that the information of the service modules of the server may include identifiers of the service modules of the server and service module feature information of the server. In the embodiment, the identifiers of the service modules of the server may be names of service modules of the server; and the service module feature information of the server may include feature information and deviation information of the service modules of the server, and the feature information and the deviation information are well known by those skilled in the art, and will not be elaborated herein.

Exemplarily, referring to Fig. 2, before the step that the server sends the first HELLO message, the method further includes S100, wherein
S100: the server receives a link establishment request sent by the client.

Therefore, the first ID information may be allocated by the server according to the link establishment request, and the first ID information may serve as an identifier of the link established by the server and the client, is configured to distinguish another link established by the server and the client, and is also configured to distinguish a link established by the server and another client.

Exemplarily, referring to Fig. 2, after the step that the server receives the link establishment request sent by the client and before the step that the server receives the acquisition request sent by the client, the method further includes S111 and S112, wherein
S111: the server receives a second HELLO message sent by the client; and
S112: the server performs negotiation on capabilities of the client in the second HELLO message and the capabilities supported by the server to acquire common capabilities of the server and the client, and determines that link establishment with the client is completed.

Specifically, the second HELLO message includes the capabilities of the client. In the embodiment, the server may compare the capabilities supported by the server with the capabilities of the client in the second HELLO message to acquire the common capabilities of the server and the client and determine that link establishment with the client is completed, and may determine the first ID information as the identifier of the link established by the server and the client.

S130: the server sends its information of the service modules to the client according to the acquisition request.

Exemplarily, since the acquisition request in Step S120 may include two conditions, Step S130 may also include that:
when the acquisition request includes the capability identifier of the client's capability for acquisition of the information of the service modules of the server, the server sends all of its information of the service modules to the client; and
when the acquisition request includes the capability identifier of the client's capability for acquisition of the information of the service modules of the server and the identifiers of the service modules required to be acquired by the client, the server sends the information of the service modules corresponding to the identifiers of the service modules required to be acquired by the client to the client.

According to the message interaction method provided by the embodiment of the disclosure, in a first interaction, the HELLO message sent by the server does not include related information of service modules of the server, ad instead, the related information of the service modules of the server is sent in a second interaction according to a specific request of the client, so that a HELLO message sending failure of the server is avoided, and a success rate of NETCONF-protocol-based link establishment between the client and the server is further increased.

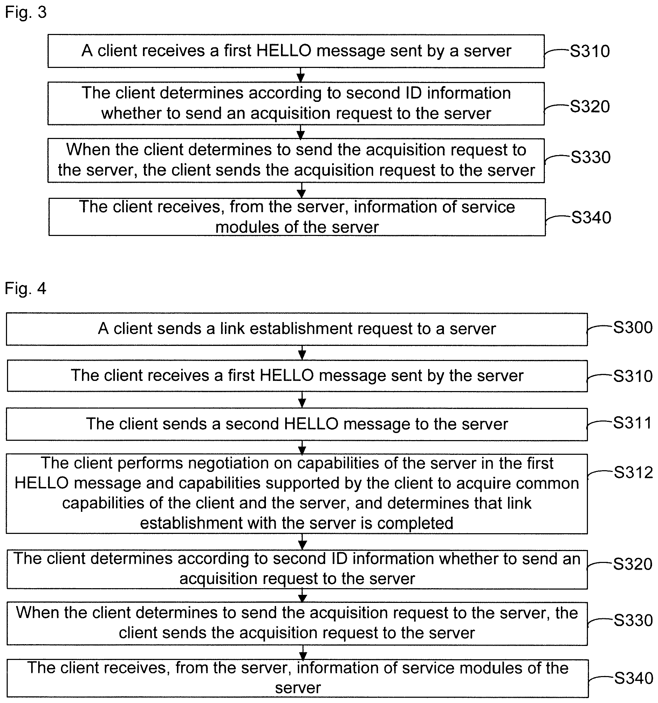

Referring to Fig. 3, a flow of another NETCONF-protocol-based HELLO message interaction method provided by the embodiment of the disclosure is shown. The method may be applied to a client in a network, and the method may include S310, S320, S330 and S340, wherein
S310: a client receives a first HELLO message sent by a server.

Exemplarily, the first HELLO message bears capabilities of the server, first ID information allocated by the server to a link established with the client and second ID information configured to represent a change state of information of service modules of the server.

Preferably, in the embodiment, the second ID information may be a check code corresponding to the information of the service modules of the server, and the check code may be obtained by performing calculation on the information of the service modules of the server through a check code algorithm. Therefore, when the information of the service modules of the server is changed, the check code corresponding to the information of the service modules of the server is also correspondingly changed. It is important to note that a common check code algorithm may include a Hash algorithm such as MD5 and an SHA, and may also include another check code algorithm, which is not specifically limited in the embodiment of the disclosure.

Furthermore, referring to Fig. 4, before Step S310, the method may further include S300, wherein
S300: the client sends a link establishment request to the server.

Specifically, the first ID information may be allocated by the server according to the link establishment request, and the first ID information may serve as an identifier of the link established by the server and the client, is configured to distinguish another link established by the server and the client, and is also configured to distinguish a link established by the server and another client.

S320: the client determines according to the second ID information whether to send an acquisition request to the server.

It is important to note that: if the client has established a link with the server, the client stores second ID information sent by the server when establishing the link with the server before, and may also store information of service modules sent by the server when establishing the link with the server before; and then, the client may compare the second ID information in the first HELLO message with second ID information stored in the client, thereby learning about whether the information of the service modules of the server is changed or not. It can be understood that the client is required to re-acquire the information of the service modules of the server when the information of the service modules of the server is changed and the client is not required to re-acquire the information of the service modules of the server when the information of the service modules of the server is not changed.

It is also important to note that: if the client has never established a link with the server, the client may not store any second ID information of the server. Therefore, the client is required to acquire the information of the service modules of the server at this moment.

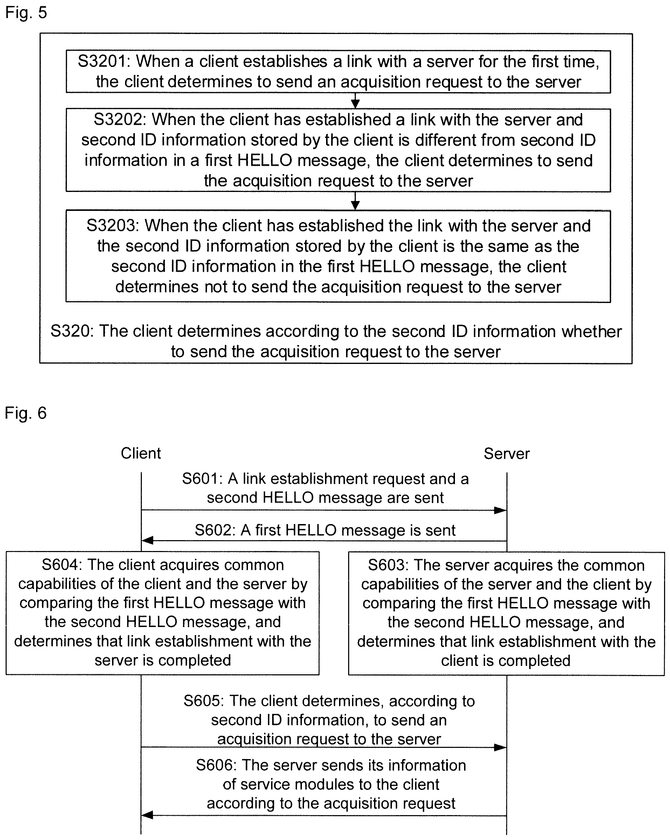

Exemplarily, with reference to the above descriptions, referring to Fig. 5, S320 may specifically include S3201 to S3203:
S3201: when the client establishes the link with the server for the first time, the client determines to send the acquisition request to the server;
S3202: when the client has established a link with the server and second ID information stored by the client is different from the second ID information in the first HELLO message, the client determines to send the acquisition request to the server; and
S3203: when the client has established the link with the server and the second ID information stored by the client is the same as the second ID information in the first HELLO message, the client determines not to send the acquisition request to the server.

Exemplarily, referring to Fig. 4, after Step S300 and before S320, the method may further include S311 and S312.

S311: the client sends a second HELLO message to the server.

Wherein, the second HELLO message includes capabilities of the client, and the second HELLO message is configured for the server to confirm that link establishment is completed.

S312: the client performs negotiation on the capabilities of the server in the first HELLO message and the capabilities supported by the client to acquire common capabilities of the client and the server, and determines that link establishment with the server is completed.

Specifically, the client may determine that link establishment with the server is completed after acquiring the common capabilities of the client and the server, and determines the first ID information in the first HELLO message as an identifier of the link established by the client and the server.

S330: when the client determines to send the acquisition request to the server, the client sends the acquisition request to the server.

Exemplarily, the acquisition request is configured to acquire the information of the service modules of the server; and the information of the service modules of the server may include identifiers of service modules of the server and service module feature information of the server. In the embodiment, the identifiers of service modules of the server may be names of service modules of the server; and the service module feature information of the server may include feature information and deviation information of the service modules of the server, and the feature information and the deviation information are well known by those skilled in the art, and will not be elaborated herein.

Furthermore, it is important to note that: if the client determines to send the acquisition request to the server, the acquisition request sent to the server by the client may include: a capability identifier of the client's capability for acquisition of the information of the service modules of the server; or, the capability identifier of the client's capability for acquisition of the information of the service modules of the server and identifiers of service modules required to be acquired by the client.

S340: the client receives, from the server, the information of the service modules of the server.

Exemplarily, according to different contents include in the acquisition request, correspondingly, in Step S340, the information of the service modules received by the client is also different, and specifically,
when the acquisition request includes the capability identifier of the client's capability for acquisition of the information of the service modules of the server, the client receives, from the server, all of the information of the service modules of the server; and
when the acquisition request includes the capability identifier of the client's capability for acquisition of the information of the service modules of the server and the identifiers of the service modules required to be acquired by the client, the client receives, from the server, the information of the service modules corresponding to the identifiers of the service modules required to be acquired by the client.

According to the message interaction method provided by the embodiment of the disclosure, in a first interaction, the HELLO message received by the client does not include the information of the service modules of the server, ad instead, the information of the service modules of the server is received in a second interaction, so that a HELLO message sending failure of the server is avoided, and a success rate of NETCONF-protocol-based link establishment between the client and the server is further increased.

Referring to Fig. 6, a detailed flow of a NETCONF-protocol-based HELLO message interaction method provided by the embodiment of the disclosure is shown. The method may include the following steps.

S601: a client sends a link establishment request and a second HELLO message to a server.

It is important to note that there is no obvious temporal sequence of sending between the link establishment request and second HELLO message of the client and they may be sent at the same time and may also be sent at different times, which is not specifically limited in the embodiment.

Exemplarily, the second HELLO message includes capabilities of the client, and the server determines common capabilities of the server and the client according to the capabilities of the client in the second HELLO message.

S602: the server sends a first HELLO message to the client after receiving the link establishment request sent by the client.

Exemplarily, the first HELLO message consists of the capabilities of the server, first ID information allocated by the server to the link establishment request and second ID information corresponding to information of service modules of the server.

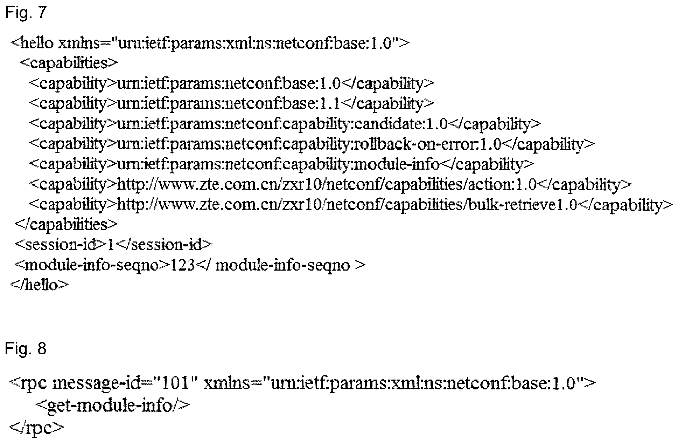

Specifically, in the embodiment, referring to Fig. 7, a content of the first HELLO message provided by the embodiment of the disclosure is shown. In the message shown in Fig. 7, a content of a capabilities sub-node is the capabilities of the server; a content of a session-id sub-node is the first ID information; and a content of a module-info-SeqNo sub-node is the second ID information. It can be found that the first HELLO message does not include the information of the service modules of the server, so that a length of the first HELLO message is smaller than a length of a HELLO message in the related technology.

It is important to note that there is also no obvious temporal sending sequence between the second HELLO message of the client and the first HELLO message of the server.

S603: the server acquires common capabilities of the server and the client by comparing the first HELLO message with the second HELLO message, and determines that link establishment with the client is completed.

Exemplarily, the server may determine that link establishment with the client is completed after acquiring the common capabilities of the server and the client, and may take the content of the session-id sub-node in the first HELLO message in Fig. 7 as an identifier of a link established by the server and the client.

S604: the client acquires the common capabilities of the client and the server by comparing the first HELLO message with the second HELLO message, and determines that link establishment with the server is completed.

Exemplarily, the client may determine that link establishment with the server is completed after acquiring the common capabilities of the client and the server, and may take the content of the session-id sub-node in the first HELLO message in Fig. 7 as the identifier of the link established by the client and the server.

It is important to note that there is no temporal sequence between S603 and S604 and they may be executed at the same time and may also be executed at different times.

After link establishment between the client and the server is completed, the client is also required to acquire the information of the service modules of the server for implementation of a specific service. Therefore, the following step may further be included.

S605: the client determines, according to second ID information, to send an acquisition request to the server according to second ID information.

Exemplarily, the acquisition request is configured to acquire the information of the service modules of the server.

It is important to note that: if the client has established a link with the server, the client may store second ID information sent by the server when establishing the link with the server before, and may also store information of service modules sent by the server when establishing the link with the server before; and
if the client has never established a link with the server, the client may not store any second ID information of the server.

Since service modules of the server may not be frequently changed, the second ID information may also not be frequently changed, and Step S605 may include that:
when the client establishes the link with the server for the first time, the client determines to send the acquisition request to the server;
when the client has established a link with the server and second ID information stored by the client is different from the second ID information in the second HELLO message, the client determines to send the acquisition request to the server; and
when the client has established the link with the server and the second ID information stored by the client is the same as the second ID information in the second HELLO message, the client determines not to send the acquisition request to the server.

Furthermore, it is important to note that: if the client determines to send the acquisition request to the server, the acquisition request sent to the server by the client may include:
a capability identifier of the client's capability for acquisition of the information of the service modules of the server, and the capability identifier represents that the client has a capability of acquiring the information of the service modules of the server, may usually be represented by an operation instruction of the client's capability for acquisition of the information of the service modules of the server, and is configured to trigger the server to send its information of the service modules to the client, for example: referring to Fig. 8, a content of an acquisition request message provided by the embodiment of the disclosure is shown, wherein get-module-info is the operation instruction of the client's capability for acquisition of the information of the service modules of the server; or
the capability identifier of the client's capability for acquisition of the information of the service modules of the server and identifiers of service modules required to be acquired by the client, wherein the identifiers of the service modules required to be acquired by the client may be configured for the server only to send the information of the service modules corresponding to the identifiers of the service modules required to be acquired by the client to the client, so that it is unnecessary to send all of the information of the service modules of the server to the client, and network resource consumption in sending the information of the service modules may be reduced, for example, this can be implemented by adding a node content of the identifiers of the service modules required to be acquired by the client into the acquisition request message shown in Fig. 8 for implementation, and a specific implementation is a technical means commonly adopted by those skilled in the art, and will not be elaborated herein.

S606: the server sends its information of the service modules to the client according to the acquisition request.

Exemplarily, since the acquisition request in S605 may include two conditions, Step S606 may also include that:
when the acquisition request includes the capability identifier of the client's capability for acquisition of the information of the service modules of the server, the server sends all of its information of the service modules to the client; and
when the acquisition request includes the capability identifier of the client's capability for acquisition of the information of the service modules of the server and the identifiers of the service modules required to be acquired by the client, the server sends the information of the service modules corresponding to the identifiers of the service modules required to be acquired by the client to the client.

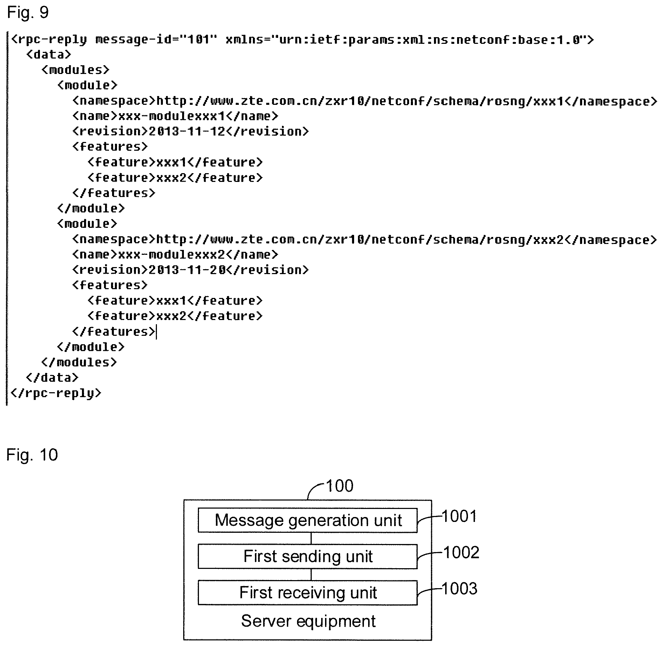

Specifically, as shown in Fig. 9, a message format of the information of the service modules sent by the server to the client according to the embodiment of the disclosure is shown, wherein a module sub-node represents a service module of the server; in the module sub-nodes, Name sub-nodes represent marks of the service modules, and Revision sub-nodes represent version information of the service modules; and in addition, the module sub-nodes further include feature information and deviation information. The client may acquire the information of the service modules of the server according to the message shown in Fig. 9.

According to the detailed flow of the message interaction method provided by the embodiment of the disclosure, in a first interaction, the HELLO message sent by the server does not include related information of service modules of the server, ad instead, the related information of the service modules of the server is sent in a second interaction according to a specific request of the client, so that a HELLO message sending failure of the server is avoided, and a success rate of NETCONF-protocol-based link establishment between the client and the server is further increased.

Referring to Fig. 10, a structure of server equipment 100 provided by the embodiment of the disclosure is shown. The equipment may include: a message generation unit 1001, a first sending unit 1002 and a first receiving unit 1003, wherein
the message generation unit 1001 is configured to bear capabilities of the server equipment, first ID information allocated to a link established with a client and second ID information configured to represent a change state of information of service modules of the server equipment in a first HELLO message;
the first sending unit 1002 is configured to send the first HELLO message to the client;
the first receiving unit 1003 is configured to receive an acquisition request sent by the client, the sending of the acquisition request being determined by the client according to the second ID information; and
the first sending unit 1002 is further configured to send information of service modules of the server equipment 100 to the client according to the acquisition request.

Exemplarily, in the related technology, the HELLO message sent by the first sending unit 1002 is required to include the information of the service modules of the server equipment 100. However, the message generation unit 1001 in the embodiment of the disclosure does not bear the information of the service modules of the server equipment 100 in the first HELLO message, and instead, adds the second ID information configured to represent the change state of the information of the service modules of the server equipment 100 to the first HELLO message.

In such a manner, a length of the first HELLO message in the embodiment of the disclosure is far smaller than a length of the HELLO message sent by the server equipment 100 in the related technology, so that the condition that the HELLO message of the server equipment 100 is failed to be sent due to the fact that the HELLO message sent by the first sending unit 1002 exceeds a maximum message length supported by client equipment may be avoided, and a success rate of NETCONF-protocol-based link establishment between a client and a server is increased.

The second ID information may reflect whether the information of the service modules of the server equipment 100 is changed or not. For example, when the information of the service modules of the server equipment 100 is changed, the second ID information is also correspondingly changed, and corresponds to the changed information of service modules of the server equipment 100.

Preferably, in the embodiment, the second ID information may be a check code corresponding to the information of the service modules of the server equipment 100, and the check code may be obtained by performing calculation on the information of the service modules of the server equipment 100 through a check code algorithm. Therefore, when the information of the service modules of the server equipment 100 is changed, the check code corresponding to the information of the service modules of the server equipment 100 is also correspondingly changed. It is important to note that a common check code algorithm may include a Hash algorithm such as MD5 and an SHA, and may also include another check code algorithm, which is not specifically limited in the embodiment of the disclosure.

Exemplarily, the first receiving unit 1003 is further configured to receive a link establishment request sent by the client, and
receive a second HELLO message sent by the client, wherein the second HELLO message includes capabilities of the client.

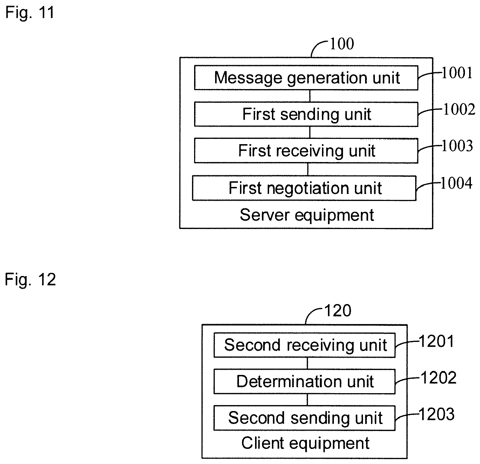

Referring to Fig. 11, the server equipment 100 further includes a first negotiation unit 1004, configured to perform negotiation on the capabilities of the client in the second HELLO message and the capabilities supported by the server to acquire common capabilities of the server and the client, and determine that link establishment with the client is completed.

Exemplarily, the sending of the acquisition request is determined by the client according to the second ID information.

Optionally, the acquisition request may include a capability identifier of the client's capability for acquisition of the information of the service modules of the server equipment 100, and the capability identifier represents that the client has a capability of acquiring the information of the service modules of the server equipment 100, may usually be represented by an operation instruction of the client's capability for acquisition of the information of the service modules of the server equipment 100, and is configured to trigger the server equipment 100 to send its information of the service modules to the client.

Optionally, the acquisition request may include the capability identifier of the client's capability for acquisition of the information of the service modules of the server equipment 100 and identifiers of service modules required to be acquired by the client, wherein the identifiers of the service modules required to be acquired by the client may be configured for the server equipment 100 only to send the information of the service modules corresponding to the identifiers of the service modules required to be acquired by the client to the client, so that it is unnecessary to send all of the information of the service modules of the server to the client, and network resource consumption in sending the information of the service modules may be reduced.

It is important to note that the information of the service modules of the server equipment 100 may include identifiers of service modules of the server equipment 100 and service module feature information of the server equipment 100. In the embodiment, the identifiers of service modules of the server equipment 100 may be names of service modules of the server equipment 100; and the service module feature information of the server equipment 100 may include feature information and deviation information of the service modules of the server equipment 100, and the feature information and the deviation information are well known by those skilled in the art, and will not be elaborated herein.

Furthermore, corresponding to a content in the acquisition request:
when the acquisition request includes the capability identifier of the client's capability for acquisition of the information of the service modules of the server, the first sending unit 1002 is configured to send all of the information of the service modules of the server equipment 100 to the client; and
when the acquisition request includes the capability identifier of the client's capability for acquisition of the information of the service modules of the server and the identifiers of the service modules required to be acquired by the client, the first sending unit 1002 is configured to send the information of the service modules corresponding to the identifiers of the service modules required to be acquired by the client to the client.

During a practical application, each unit shown in Fig. 10 and Fig. 11 is implemented by a micro processing unit or Field-Programmable Gate Array (FPGA) in the server equipment.

According to the server equipment 100 provided by the embodiment of the disclosure, in a first interaction, the HELLO message sent by the first sending unit 1002 does not include related information of service modules of the server, ad instead, the related information of the service modules of the server is sent in a second interaction according to a specific request of the client, so that a HELLO message sending failure of the server equipment 100 is avoided, and a success rate of NETCONF-protocol-based link establishment between the client and the server equipment 100 is further increased.

Referring to Fig. 12, a structure of client equipment 120 provided by the embodiment of the disclosure is shown. The client equipment 120 may include: a second receiving unit 1201, a determination unit 1202 and a second sending unit 1203, wherein
the second receiving unit 1201 is configured to receive a first HELLO message sent by a server, wherein the first HELLO message bears capabilities of the server, first ID information allocated to a link established with a client by the server and second ID information configured to represent a change state of information of service modules of the server;
the determination unit 1202 is configured to determine according to the second ID information whether to trigger the second sending unit 1203 to send an acquisition request to the server;
the second sending unit 1203 is configured to, when the determination unit 1202 determines to trigger the second sending unit 1203, send the acquisition request to the server; and
the second receiving unit 1201 is configured to receive, from the server, the information of the service modules of the server.

Exemplarily, the first HELLO message bears the capabilities of the server, the first ID information allocated by the server to the link established with the client 120 and the second ID information configured to represent the change state of the information of the service modules of the server.

Preferably, in the embodiment, the second ID information may be a check code corresponding to the information of the service modules of the server, and the check code may be obtained by performing calculation on the information of the service modules of the server through a check code algorithm. Therefore, when the information of the service modules of the server is changed, the check code corresponding to the information of the service modules of the server is also correspondingly changed. It is important to note that a common check code algorithm may include a Hash algorithm such as MD5 and an SHA, and may also include another check code algorithm, which is not specifically limited in the embodiment of the disclosure.

Exemplarily, the second sending unit 1203 is further configured to send a link establishment request to the server, and
send a second HELLO message to the server, wherein the second HELLO message includes capabilities of the client equipment 120.

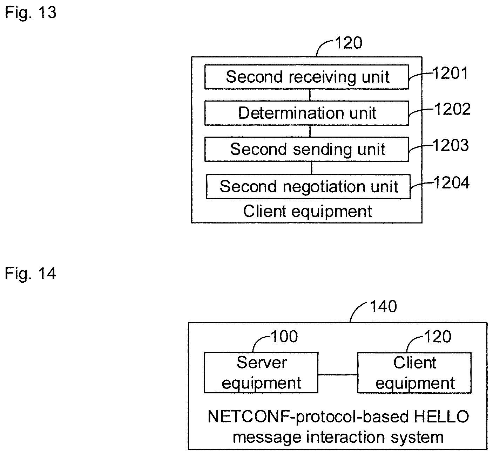

Referring to Fig. 13, the client equipment 120 further includes a second negotiation unit 1204, configured to perform negotiation on the capabilities of the server in the first HELLO message and the capabilities supported by the client to acquire common capabilities of the client equipment 120 and the server, and determine that link establishment with the server is completed.

It is important to note that: if the client equipment 120 has established a link with the server, the client equipment 120 may store second ID information sent by the server when establishing the link with the server before, and may also store information of service modules sent by the server when establishing the link with the server before; and then, the client equipment 120 may compare the second ID information in the first HELLO message with own stored second ID information, thereby learning about whether the information of the service modules of the server is changed or not. It can be understood that the client equipment 120 is required to re-acquire the information of the service modules of the server when the information of the service modules of the server is changed and the client equipment 120 is not required to re-acquire the information of the service modules of the server when the information of the service modules of the server is not changed.

It is also important to note that: if the client equipment 120 has never established a link with the server, the client may not store any second ID information of the server. Therefore, the client is required to acquire the information of the service modules of the server at this moment. Therefore, exemplarily, the determination unit 1202 is configured to:
when the client equipment 120 establishes the link with the server for the first time, determine to send the acquisition request to the server;
when the client equipment 120 has established a link with the server and second ID information stored by the client equipment is different from the second ID information in the first HELLO message, determine to send the acquisition request to the server; and
when the client equipment 120 has established the link with the server and the second ID information stored by the client equipment 120 is the same as the second ID information in the first HELLO message, determine not to send the acquisition request to the server.

Exemplarily, the acquisition request includes:
a capability identifier of the client equipment 120 about acquisition of the information of the service modules of the server; or
the capability identifier of the client equipment 120 about acquisition of the information of the service modules of the server and identifiers of service modules required to be acquired by the client equipment.

Exemplarily, according to different contents in the acquisition request, correspondingly, the second receiving unit 1201 is configured to:
when the acquisition request includes the capability identifier of the client 120 about acquisition of the information of the service modules of the server, receive, from the server, all of the information of the service modules of the server; and
when the acquisition request includes the capability identifier of the client 120 about acquisition of the information of the service modules of the server and the identifiers of the service modules required to be acquired by the client, receive, from the server, the information of the service modules required to be acquired by the client.

During a practical application, each unit shown in Fig. 12 and Fig. 13 may be implemented by a micro processing unit or FPGA in the client equipment.

According to the client equipment 120 provided by the embodiment of the disclosure, in a first interaction, the HELLO message received by the second receiving unit 1202 does not include the information of the service modules of the server, ad instead, the information of the service modules of the server is received in a second interaction, so that a HELLO message sending failure of the server is avoided, and a success rate of NETCONF-protocol-based link establishment between the client equipment 120 and the server is further increased.

Referring to Fig. 14, a structure of a NETCONF-protocol-based message interaction system 140 provided by the embodiment of the disclosure is shown. The system may include: server equipment 100 and client equipment 120, wherein
the server equipment 100 is configured to:
bear capabilities of the server equipment 100, first ID information allocated to the client equipment 120 with which a link is established and second ID information configured to represent a change state of information of service modules of the server equipment 100 in a first HELLO message, send the first HELLO message to the client equipment 120,
receive an acquisition request sent by the client equipment 120, the sending of the acquisition request being determined by the client equipment 120 according to the second ID information, and
send information of service modules of the server equipment 100 to the client equipment 120 according to the acquisition request; and
the client equipment 120 is configured to:
   receive the first HELLO message sent by the server equipment 100, wherein the first HELLO message bears the capabilities of the server equipment 100, the first ID information allocated by the server to the client equipment 120 equipment 100 and the second ID information configured to represent the change state of the information of the service modules of the server equipment 100,
   determine according to the second ID information whether to send the acquisition request to the server equipment 100 ,
   when the client equipment 120 determines to send the acquisition request to the server equipment 100, send the acquisition request to the server equipment 100, and
   receive, from the server equipment 100, the information of the service modules of the server equipment.

According to the message interaction system provided by the embodiment of the disclosure, in a first interaction, the HELLO message sent by the server equipment 100 does not include related information of service modules of the server equipment 100, ad instead, the related information of the service modules of the server equipment 100 is sent in a second interaction according to a specific request of the client equipment 120, so that a HELLO message sending failure of the server equipment 100 is avoided, and a success rate of NETCONF-protocol-based link establishment between the client equipment 120 and the server equipment 100 is further increased.

The embodiment of the disclosure further records a computer storage medium having stored therein computer-executable instructions configured to execute the HELLO message interaction methods shown in any one of Fig. 1 to Fig. 5.

Those skilled in the art should know that the embodiments of the disclosure may be provided as a method, a system or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiments of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above are only the preferred embodiments of the disclosure and not intended to limit the scope of the invention, which is defined by the appended claims.

## Claims

1. A Network Configuration, NETCONF, -protocol-based HELLO message interaction method, comprising:
bearing (S110), by a server, its capabilities, first Identification, ID, information allocated to a link established with a client and second ID information configured to represent a change state of information of service modules of the server in a first HELLO message, and sending the first HELLO message to the client;
receiving (S120), by the server, an acquisition request sent by the client, the sending of the acquisition request being determined by the client according to the second ID information; and
sending (S130), by the server, its information of the service modules to the client according to the acquisition request;
wherein before sending, by the server, the first HELLO message, the method comprises receiving (S100), by the server, a link establishment request sent by the client;
wherein after receiving, by the server, the link establishment request sent by the client and before receiving, by the server, the acquisition request sent by the client, the method further comprises receiving (S111), by the server, a second HELLO message sent by the client, wherein the second HELLO message comprises capabilities of the client, performing (S112), by the server, negotiation on the capabilities of the client in the second HELLO message and the capabilities supported by the server to acquire common capabilities of the server and the client, and determining that link establishment with the client is completed;
wherein determining, by the client according to the second ID information, whether to send the acquisition request to the server comprises:
determining to send said acquisition request when the client establishes the link with the server for the first time or when the client has established a link with the server and second ID information stored by the client is different from the second ID information in the first HELLO message; and
determining not to send said acquisition request when the client has established the link with the server and the second ID information stored by the client is the same as the second ID information in the first HELLO message.

2. The method according to claim 1, wherein the acquisition request comprises a capability identifier of the client's capability for acquisition of the information of the service modules of the server; and
correspondingly, sending, by the server, its information of the service modules to the client according to the acquisition request comprises: sending, by the server, all of its information of the service modules to the client; or
the acquisition request comprises a capability identifier of the client's capability for acquisition of the information of the service modules of the server and identifiers of service modules required to be acquired by the client;
correspondingly, sending, by the server, its information of the service modules to the client according to the acquisition request comprises: sending, by the server, information of service modules corresponding to the identifiers of the service modules required to be acquired by the client to the client.

3. A Network Configuration, NETCONF, -protocol-based HELLO message interaction method, comprising:
receiving, by a client, a first HELLO message sent by a server, wherein the first HELLO message bears capabilities of the server, first Identification, ID, information allocated by the server to a link established with the client and second ID information configured to represent a change state of information of service modules of the server;
determining, by the client according to the second ID information, whether to send an acquisition request to the server;
when the client determines to send the acquisition request to the server, sending, by the client, the acquisition request to the server; and
receiving, by the client from the server, the information of the service modules of the server;
wherein the method further comprises:
before receiving, by the client, the first HELLO message sent by the server, sending, by the client, a link establishment request to the server; and
after sending, by the client, the link establishment request to the server and before determining, by the client according to the second ID information, whether to send the acquisition request to the server, sending, by the client, a second HELLO message to the server, wherein the second HELLO message comprises capabilities of the client, and performing, by the client, negotiation on the capabilities of the server in the first HELLO message and the capabilities supported by the client to acquire common capabilities of the client and the server, and determining that link establishment with the server is completed;
wherein determining, by the client according to the second ID information, whether to send the acquisition request to the server comprises:
when the client establishes the link with the server for the first time, determining, by the client, to send the acquisition request to the server;
when the client has established a link with the server and second ID information stored by the client is different from the second ID information in the first HELLO message, determining, by the client, to send the acquisition request to the server;
when the client has established the link with the server and the second ID information stored by the client is the same as the second ID information in the first HELLO message, determining, by the client, not to send the acquisition request to the server.

4. The method according to claim 3, wherein the acquisition request comprises:
a capability identifier of the client's capability for acquisition of the information of the service modules of the server; or
the capability identifier of the client's capability for acquisition of the information of the service modules of the server and identifiers of service modules required to be acquired by the client,
when the acquisition request comprises the capability identifier of the client's capability for acquisition of the information of the service modules of the server, receiving, by the client from the server, the information of the service modules of the server comprises:
receiving, by the client from the server, all of the information of the service modules of the server; or
when the acquisition request comprises the capability identifier of the client's capability for acquisition of the information of the service modules of the server and the identifiers of the service modules required to be acquired by the client, receiving, by the client from the server, the information of the service modules of the server comprises:
receiving, by the client from the server, information of service modules corresponding to the identifiers of the service modules required to be acquired by the client.

5. Server equipment (100), comprising: a message generation unit (1001), a first sending unit (1002) and a first receiving unit (1003),
wherein the message generation unit (1001) is configured to bear capabilities of the server equipment (100), first Identification, ID, information allocated to a link established with a client and second ID information configured to represent a change state of information of service modules of the server equipment in a first Network Configuration, NETCONF, -protocol-based HELLO message;
the first sending unit (1002) is configured to send the first HELLO message to the client;
the first receiving unit (1003) is configured to receive an acquisition request sent by the client, when the sending of the acquisition request is determined by the client according to the second ID information; and
the first sending unit (1002) is further configured to send the information of the service modules of the server equipment (100) to the client according to the acquisition request;
wherein the first receiving unit (1003) is further configured to receive a link establishment request sent by the client, and to receive a second Network Configuration, NETCONF, -protocol-based HELLO message sent by the client, wherein the second HELLO message comprises capabilities of the client; and
the server equipment (100) further comprises a first negotiation unit (1004), configured to perform negotiation on the capabilities of the client in the second HELLO message and the capabilities supported by the server equipment to acquire common capabilities of a server and the client, and determine that link establishment with the client is completed;
wherein determining, by the client according to the second ID information, whether to send the acquisition request comprises:
determining to send the acquisition request when the client establishes the link with the server for the first time, or when the client has established a link with the server equipment (100) and second ID information stored by the client is different from the second ID information in the first HELLO message,
determining not to send the send the acquisition request when the client has established the link with the server equipment (100) and the second ID information stored by the client is the same as the second ID information in the first HELLO message.

6. The server equipment (100) according to claim 5, wherein the acquisition request comprises a capability identifier of the client's capability for acquisition of the information of the service modules of the server equipment (100);
correspondingly, the first sending unit (1002) is configured to send all of the information of the service modules of the server equipment (100) to the client; or
the acquisition request comprises a capability identifier of the client's capability for acquisition of the information of the service modules of the server equipment (100) and identifiers of service modules required to be acquired by the client;
correspondingly, the first sending unit (1002) s configured to send information of service modules corresponding to the identifiers of the service modules required to be acquired by the client to the client.

7. Client equipment (120), comprising: a second receiving unit (1201), a determination unit (1202) and a second sending unit (1203), wherein the second receiving unit (1201) is configured to receive a first Network Configuration, NETCONF, -protocol-based HELLO message sent by a server, wherein the first HELLO message bears capabilities of the server, first Identification (ID) information allocated by the server to a link established with the client equipment (120) and second ID information configured to represent a change state of information of service modules of the server;
the determination unit (1202) is configured to determine according to the second ID information whether to trigger the second sending unit (1203) to send an acquisition request to the server;
the second sending unit (1203) is configured to, when the determination unit (1202) determines to trigger the second sending unit (1203), send the acquisition request to the server; and
the second receiving unit (1201) is configured to receive, from the server, the information of the service modules of the server;
wherein the second sending unit (1203) is further configured to send a link establishment request to the server, and to send a second Network Configuration, NETCONF, -protocol-based HELLO message to the server, wherein the second HELLO message comprises capabilities of the client;
the client equipment (120) further comprises a second negotiation unit (1204), configured to perform negotiation on the capabilities of the server in the first HELLO message and the capabilities supported by the client to acquire common capabilities of the client equipment (120) and the server, and determine that link establishment with the server is completed;
wherein the determination unit (1202) is further configured to:
determine to send the acquisition request to the server when the client equipment (120) establishes the link with the server for the first time, or when the client equipment (120) has established the link with the server and second ID information stored by the client equipment (120) is different from the second ID information in the first HELLO message;
determine not to send the acquisition request to the server when the client equipment has established the link with the server and the second ID information stored by the client equipment (120) is the same as the second ID information in the first HELLO message.

8. The client equipment (120) according to claim 7, wherein the acquisition request comprises:
a capability identifier of the client equipment's capability for acquisition of the information of the service modules of the server; or
the capability identifier of the client equipment's capability for acquisition of the information of the service modules of the server and identifiers of service modules required to be acquired by the client equipment (120),
when the acquisition request comprises the capability identifier of the client equipment's capability for acquisition of the information of the service modules of the server, the second receiving unit is configured to:
receive, from the server, all of the information of the service modules of the server; or
when the acquisition request comprises the capability identifier of the client equipment's capability for acquisition of the information of the service modules of the server and the identifiers of the service modules required to be acquired by the client equipment, the second receiving unit is configured to:
receive, from the server, information of service modules corresponding to the identifiers of the service modules required to be acquired by the client equipment (120).

9. A Network Configuration, NETCONF, -protocol-based HELLO message interaction system, comprising: server equipment (100) and client equipment (120),
wherein the server equipment (100) is configured to:
bear capabilities of the server equipment (100), first Identification, ID, information allocated to the client equipment (120) with which a link is established and second ID information configured to represent a change state of information of service modules of the server equipment (100) in a first HELLO message, send the first HELLO message to the client equipment,
receive an acquisition request sent by the client equipment (120), when the sending of the acquisition request is determined by the client equipment according to the second ID information, and
send the information of the service modules of the server equipment (100) to the client equipment (120) according to the acquisition request;
wherein the server equipment (100) is further configured to: receive a link establishment request sent by the client equipment (120),
receive a second HELLO message sent by the client equipment (120), wherein the second HELLO message comprises capabilities of the client equipment (120); and
perform negotiation on the capabilities of the client in the second HELLO message and the capabilities supported by the server equipment (100) to acquire common capabilities of the server equipment (100) and the client equipment (120), and determine that link establishment with the client equipment (120) is completed;
the client equipment (120) is configured to:
receive the first HELLO message sent by the server equipment (100), wherein the first HELLO message bears the capabilities of the server equipment (100), the first ID information allocated by the server equipment (100) to the client equipment (120) and the second ID information configured to represent the change state of the information of the service modules of the server equipment,
determine according to the second ID information whether to send the acquisition request to the server equipment (100),
when the client equipment (120) determines to send the acquisition request to the server equipment (100), send the acquisition request to the server equipment (100), and
receive, from the server equipment (100), the information of the service modules of the server equipment (100);
wherein the client equipment (120) is further configured to:
send a link establishment request to the server equipment (100),
send a second HELLO message to the server equipment (100), wherein the second HELLO message comprises capabilities of the client equipment (120);
perform negotiation on the capabilities of the server in the first HELLO message and the capabilities supported by the client equipment (120) to acquire common capabilities of the client equipment (120) and the server equipment (100), and determine that link establishment with the server equipment (100) is completed;
wherein determining, by the client equipment according to the second ID information, whether to send the acquisition request to the server equipment comprises:
determining to send the acquisition request when the client equipment (120) establishes the link with the server equipment (100) for the first time, or when the client equipment (120) has established a link with the server equipment (100) and second ID information stored by the client equipment (120) is different from the second ID information in the first HELLO message,
determining not to send the acquisition request when the client equipment (120) has established the link with the server equipment (100) and the second ID information stored by the client equipment (120) is the same as the second ID information in the first HELLO message.

## Patentansprüche

1. Netzwerkkonfiguration-, NETCONF-, Protokoll-basierte HELLO-Nachricht-Interaktionsverfahren, umfassend:
Bereitstellen (S110), durch einen Server, von dessen Fähigkeiten, von ersten Identifizierungs-, ID-, Informationen, die einer Verknüpfung zugeordnet sind, die mit einem Client hergestellt ist, und zweiten ID-Informationen, die zum Darstellen eines Änderungszustands von Informationen von Dienstmodulen des Servers ausgebildet sind, und Senden der ersten HELLO-Nachricht zu dem Client;
Empfangen (S120), durch den Server, einer Erfassungsanfrage, die durch den Client gesendet wird, wobei das Senden der Erfassungsanfrage durch den Client gemäß den zweiten ID-Informationen bestimmt wird; und
Senden (S130), durch den Server, von dessen Informationen der Dienstmodule zu dem Client gemäß der Erfassungsanfrage;
wobei vor dem Senden, durch den Server, der ersten HELLO-Nachricht, das Verfahren das Empfangen (S100), durch den Server, einer Verknüpfungsherstellungsanfrage, die durch den Client gesendet wird, umfasst;
wobei nach dem Empfangen, durch den Server, der Verknüpfungsherstellungsanfrage, die durch den Client gesendet worden ist, und vor dem Empfangen, durch den Server, der Erfassungsanfrage, die durch den Client gesendet worden ist, das Verfahren ferner das Empfangen (S111), durch den Server, einer zweiten HELLO-Nachricht, die durch den Client gesendet worden ist, wobei die zweite HELLO-Nachricht Fähigkeiten des Client umfasst, das Durchführen (S112), durch den Server, eines Aushandelns bezüglich der Fähigkeiten des Client in der zweiten HELLO-Nachricht und der Fähigkeiten, die durch den Server unterstützt werden, um gemeinsame Fähigkeiten des Servers und des Client zu erfassen, und das Bestimmen, dass die Verknüpfungsherstellung mit dem Client vollständig ist, umfasst;
wobei das Bestimmen, durch den Client gemäß den zweiten ID-Informationen, ob die Erfassungsanfrage zu dem Server gesendet werden soll, umfasst:
Bestimmen, dass die Erfassungsanfrage gesendet werden soll, wenn der Client die Verknüpfung mit dem Server das erste Mal herstellt, oder wenn der Client eine Verknüpfung mit dem Server hergestellt hat und zweite ID-Informationen, die durch den Client gespeichert sind, von den zweiten ID-Informationen in der ersten HELLO-Nachricht verschieden sind; und
Bestimmen, dass die Erfassungsanfrage nicht gesendet werden soll, wenn der Client die Verknüpfung mit dem Server hergestellt hat und die zweiten ID-Informationen, die durch den Client gespeichert sind, mit den zweiten ID-Informationen in der ersten HELLO-Nachricht identisch sind.

2. Verfahren nach Anspruch 1, bei dem die Erfassungsanfrage einen Fähigkeitsidentifikator der Fähigkeit des Client zur Erfassung der Informationen der Dienstmodule des Servers umfasst; und
entsprechend das Senden, durch den Server, von dessen Informationen der Dienstmodule zu dem Client gemäß der Erfassungsanfrage umfasst: Senden, durch den Server, von dessen gesamten Informationen der Dienstmodule zu dem Client; oder
die Erfassungsanfrage einen Fähigkeitsidentifikator der Fähigkeit des Client zur Erfassung der Informationen der Dienstmodule des Servers und Identifikatoren von Dienstmodulen umfasst, die durch den Client erfasst werden sollen;
entsprechend das Senden, durch den Server, von dessen Informationen der Dienstmodule zu dem Client gemäß der Erfassungsanfrage umfasst: Senden, durch den Server, von Informationen von Dienstmodulen, die den Identifikatoren der Dienstmodule entsprechen, die durch den Client erfasst werden sollen, zu dem Client.

3. Netzwerkkonfiguration-, NETCONF-, Protokoll-basiertes HELLO-Nachricht-Interaktionsverfahren, umfassend:
Empfangen, durch einen Client, einer ersten HELLO-Nachricht, die durch einen Server gesendet worden ist, wobei die erste HELLO-Nachricht Fähigkeiten des Servers, erste Identifizierungs-, ID-, Informationen, die durch den Server einer Verknüpfung zugeordnet sind, die mit dem Client hergestellt ist, und zweite ID-Informationen bereitstellt, die zum Darstellen eines Änderungszustands von Informationen von Dienstmodulen des Servers ausgebildet sind;
Bestimmen, durch den Client gemäß den zweiten ID-Informationen, ob eine Erfassungsanfrage zu dem Server gesendet werden soll;
wenn der Client bestimmt, die Erfassungsanfrage zu dem Server zu senden, Senden, durch den Client, der Erfassungsanfrage zu dem Server; und
Empfangen, durch den Client von dem Server, der Informationen der Dienstmodule des Servers;
wobei das Verfahren ferner umfasst:
vor dem Empfangen, durch den Client, der ersten HELLO-Nachricht, die durch den Server gesendet worden ist, das Senden, durch den Client, einer Verknüpfungsherstellungsanfrage zu dem Server; und
nach dem Senden, durch den Client, der Verknüpfungsherstellungsanfrage zu dem Server, und vor dem Bestimmen, durch den Client gemäß den zweiten ID-Informationen, ob die Erfassungsanfrage zu dem Server gesendet werden soll, das Senden, durch den Client, einer zweiten HELLO-Nachricht zu dem Server, wobei die zweite HELLO-Nachricht Fähigkeiten des Client umfasst, und Durchführen, durch den Client, eines Aushandelns der Fähigkeiten des Servers in der ersten HELLO-Nachricht und der Fähigkeiten, die durch den Client unterstützt werden, zum Erfassen von gemeinsamen Fähigkeiten des Client und des Servers, und eines Bestimmens, dass die Verknüpfungsherstellung mit dem Server abgeschlossen ist;
wobei das Bestimmen, durch den Client gemäß den zweiten ID-Informationen, ob die Erfassungsanfrage zu dem Server gesendet werden soll, umfasst:
wenn der Client die Verknüpfung mit dem Server zu ersten Mal herstellt, Bestimmen, durch den Client, die Erfassungsanfrage zu dem Server zu senden;
wenn der Client eine Verknüpfung mit dem Server hergestellt hat und zweite ID-Informationen, die durch den Client gespeichert sind, von den zweiten ID-Informationen in der ersten HELLO-Nachricht verschieden sind, Bestimmen, durch den Client, die Erfassungsanfrage zu dem Server zu senden;
wenn der Client die Verknüpfung mit dem Server hergestellt hat und die zweiten ID-Informationen, die durch den Client gespeichert sind, mit den zweiten ID-Informationen in der ersten HELLO-Nachricht identisch sind, Bestimmen, durch den Client, die Erfassungsanfrage nicht zu dem Server zu senden.

4. Verfahren nach Anspruch 3, bei dem die Erfassungsanfrage umfasst:
einen Fähigkeitsidentifikator der Fähigkeit des Client zur Erfassung der Informationen der Dienstmodule des Servers; oder
den Fähigkeitsidentifikator der Fähigkeit des Client zur Erfassung der Informationen der Dienstmodule des Servers und Identifikatoren von Dienstmodulen, die durch den Client erfasst werden sollen,
wenn die Erfassungsanfrage den Fähigkeitsidentifikator der Fähigkeit des Client zur Erfassung der Informationen der Dienstmodule des Servers umfasst, das Empfangen, durch den Client von dem Server, der Informationen der Dienstmodule des Servers umfasst:
Empfangen, durch den Client von dem Server, von allen Informationen der Dienstmodule des Servers; oder
wenn die Erfassungsanfrage den Fähigkeitsidentifikator der Fähigkeit des Client zur Erfassung der Informationen der Dienstmodule des Servers und die Identifikatoren der Dienstmodule, die durch den Client erfasst werden sollen, umfasst, das Empfangen, durch den Client von dem Server, der Informationen der Dienstmodule des Servers umfasst:
Empfangen, durch den Client von dem Server, von Informationen von Dienstmodulen, die den Identifikatoren der Dienstmodule entsprechen, die durch den Client erfasst werden sollen.

5. Servergerät (100), umfassend: eine Nachricht-Erzeugungseinheit (1001), eine erste Sendeeinheit (1002) und eine erste Empfangseinheit (1003),
wobei die Nachricht-Erzeugungseinheit (1001) zum Bereitstellen von Fähigkeiten des Servergeräts (100), von ersten Identifizierungs-, ID-, Informationen, die einer Verknüpfung zugeordnet sind, die mit einem Client hergestellt ist, und zweiten ID-Informationen, die zum Darstellen eines Änderungszustands von Informationen von Dienstmodulen des Servergeräts ausgebildet sind, in einer ersten Netzwerkkonfiguration-, NETCONF-, Protokoll-basierten HELLO-Nachricht ausgebildet ist;
wobei die erste Sendeeinheit (1002) zum Senden der ersten HELLO-Nachricht zu dem Client ausgebildet ist;
wobei die erste Empfangseinheit (1003) zum Empfangen einer Erfassungsanfrage, die durch den Client gesendet wird, ausgebildet ist, wenn das Senden der Erfassungsanfrage durch den Client gemäß den zweiten ID-Informationen bestimmt wird; und
die erste Sendeeinheit (1002) ferner zum Senden der Informationen der Dienstmodule des Servergeräts (100) zu dem Client gemäß der Erfassungsanfrage ausgebildet ist;
wobei die erste Empfangseinheit (1003) ferner zum Empfangen einer Verknüpfungsherstellungsanfrage, die durch den Client gesendet wird, und zum Empfangen einer zweiten Netzwerkkonfiguration-, NETCONF-, Protokoll-basierten HELLO-Nachricht, die durch den Client gesendet wird, ausgebildet ist, wobei die zweite HELLO-Nachricht Fähigkeiten des Client umfasst;
wobei das Servergerät (100) ferner eine erste Aushandlungseinheit (1004) umfasst, die zum Durchführen eines Aushandelns bezüglich der Fähigkeiten des Client in der zweiten HELLO-Nachricht und der Fähigkeit, die durch den Server unterstützt wird, um gemeinsame Fähigkeiten des Servers und des Client zu erfassen, und zum Bestimmen, dass die Verknüpfungsherstellung mit dem Client vollständig ist, ausgebildet ist;
wobei das Bestimmen, durch den Client gemäß den zweiten ID-Informationen, ob die Erfassungsanfrage zu dem Server gesendet werden soll, umfasst:
Bestimmen, dass die Erfassungsanfrage gesendet werden soll, wenn der Client die Verknüpfung mit dem Server das erste Mal herstellt, oder wenn der Client eine Verknüpfung mit dem Servergerät (100) hergestellt hat und zweite ID-Informationen, die durch den Client gespeichert sind, von den zweiten ID-Informationen in der ersten HELLO-Nachricht verschieden sind;
Bestimmen, dass die Erfassungsanfrage nicht gesendet werden soll, wenn der Client die Verknüpfung mit dem Servergerät (100) hergestellt hat und die zweiten ID-Informationen, die durch den Client gespeichert sind, mit den zweiten ID-Informationen in der ersten HELLO-Nachricht identisch sind.

6. Servergerät (100) nach Anspruch 5, wobei die Erfassungsanfrage einen Fähigkeitsidentifikator der Fähigkeit des Client zur Erfassung der Informationen der Dienstmodule des Servergeräts (100) umfasst;
entsprechend die erste Sendeeinheit (1002) zum Senden aller Informationen der Dienstmodule des Servergeräts (100) zu dem Client ausgebildet ist; oder
die Erfassungsanfrage einen Fähigkeitsidentifikator der Fähigkeit des Client zur Erfassung der Informationen der Dienstmodule des Servergeräts (100) und Identifikatoren von Dienstmodulen, die durch den Client erfasst werden sollen, umfasst;
entsprechend die erste Sendeeinheit (1002) zum Senden von Informationen von Dienstmodulen, die den Identifikatoren der Dienstmodule entsprechen, die durch den Client erfasst werden sollen, ausgebildet ist.

7. Clientgerät (120), umfassend: eine zweite Empfangseinheit (1201), eine Bestimmungseinheit (1202) und eine zweite Sendeeinheit (1203),
wobei die zweite Empfangseinheit (1201) zum Empfangen einer ersten Netzwerkkonfiguration-, NETCONF-, Protokoll-basierten HELLO-Nachricht ausgebildet ist, die durch einen Server gesendet worden ist, wobei die erste HELLO-Nachricht Fähigkeiten des Servers, erste Identifizierungs-, ID-, Informationen, die durch den Server einer Verknüpfung zugeordnet sind, die mit dem Clientgerät (120) hergestellt ist, und zweite ID-Informationen bereitstellt, die zum Darstellen eines Änderungszustands von Informationen von Dienstmodulen des Servers ausgebildet sind;
die Bestimmungseinheit (1202) zum Bestimmen gemäß den zweiten ID-Informationen, ob die zweite Sendeeinheit (1203) zum Senden einer Erfassungsanfrage zu dem Server ausgelöst werden soll, ausgebildet ist;
wobei die zweite Sendeeinheit (1203), wenn die Bestimmungseinheit (1202) das Auslösen der zweiten Sendeeinheit (1203) bestimmt, zum Senden der Erfassungsanfrage zu dem Server ausgebildet ist; und
die zweite Empfangseinheit (1201) zum Empfangen, von dem Server, der Informationen der Dienstmodule des Servers ausgebildet ist;
wobei die zweite Sendeeinheit (1203) ferner zum Senden einer Verknüpfungsherstellungsanfrage zu dem Server und zum Senden einer zweiten Netzwerckonfiguration-, NETCONF-, Protokoll-basierten HELLO-Nachricht zu dem Server ausgebildet ist, wobei die zweite HELLO-Nachricht Fähigkeiten des Client umfasst;
wobei das Clientgerät (120) ferner eine zweite Aushandlungseinheit (1204) umfasst, die zum Durchführen eines Aushandelns der Fähigkeiten des Servers in der ersten HELLO-Nachricht und der Fähigkeiten, die durch den Client unterstützt werden, zum Erfassen von gemeinsamen Fähigkeiten des Clientgeräts (120) und des Servers, und eines Bestimmens, dass die Verknüpfungsherstellung mit dem Server abgeschlossen ist, ausgebildet ist;
wobei die Bestimmungseinheit (1202) ferner ausgebildet ist zum:
Bestimmen, die Erfassungsanfrage zu dem Server zu senden, wenn das Clientgerät (120) die Verknüpfung mit dem Server zum ersten Mal herstellt, oder wenn das Clientgerät (120) die Verknüpfung mit dem Server hergestellt hat und die zweiten ID-Informationen, die durch das Clientgerät (120) gespeichert sind, von den zweiten ID-Informationen in der ersten HELLO-Nachricht verschieden sind;
Bestimmen, die Erfassungsanfrage nicht zu dem Server zu senden, wenn das Clientgerät die Verknüpfung mit dem Server hergestellt hat und die zweiten ID-Informationen, die durch das Clientgerät (120) gespeichert sind, mit den zweiten ID-Informationen in der ersten HELLO-Nachricht identisch sind.

8. Clientgerät (120) nach Anspruch 7, wobei die Erfassungseinheit umfasst:
einen Fähigkeitsidentifikator der Fähigkeit des Clientgeräts zum Erfassen der Informationen der Dienstmodule des Servers; oder
den Fähigkeitsidentifikator der Fähigkeit des Clientgeräts zum Erfassen der Informationen der Dienstmodule des Servers und Identifikatoren von Dienstmodulen, die durch das Clientgerät (120) erfasst werden sollen,
wenn die Erfassungsanfrage den Fähigkeitsidentifikator der Fähigkeit des Clientgeräts zum Erfassen der Informationen der Dienstmodule des Servers umfasst, die zweite Empfangseinheit ausgebildet ist zum:
Empfangen, von dem Server, aller Informationen der Dienstmodule des Servers; oder
wenn die Erfassungsanfrage den Fähigkeitsidentifikator der Fähigkeit des Clientgeräts zum Erfassen der Informationen der Dienstmodule des Servers und die Identifikatoren der Dienstmodule, die durch das Clientgerät erfasst werden sollen, umfasst, die zweite Empfangseinheit ausgebildet ist zum:
Empfangen, von dem Server, von Informationen von Dienstmodulen, die den Identifikatoren der Dienstmodule entsprechen, die durch das Clientgerät (120) erfasst werden sollen.

9. Netzwerkkonfiguration-, NETCONF-, Protokoll-basiertes HELLO-Nachricht-Interaktionssystem, umfassend: ein Servergerät (100) und ein Clientgerät (120),
wobei das Servergerät (100) ausgebildet ist zum:
Bereitstellen von Fähigkeiten des Servergeräts (100), ersten Identifizierungs-, ID-, Informationen, die dem Clientgerät (120) zugeordnet sind, mit dem eine Verknüpfung hergestellt wird, und zweiten ID-Informationen, die zum Darstellen eines Änderungszustands von Informationen von Dienstmodulen des Servergeräts (100) in einer ersten HELLO-Nachricht ausgebildet sind, Senden der ersten HELLO-Nachricht zu dem Clientgerät,
Empfangen einer Erfassungsanfrage, die durch das Clientgerät (120) gesendet wird, wenn das Senden der Erfassungsanfrage durch das Clientgerät gemäß den zweiten ID-Informationen bestimmt wird, und
Senden der Informationen der Dienstmodule des Servergeräts (100) zu dem Clientgerät (120) gemäß der Erfassungsanfrage;
wobei das Servergerät (100) ferner ausgebildet ist zum: Empfangen einer Verknüpfungsherstellungsanfrage, die durch das Clientgerät (120) gesendet wird,
Empfangen einer zweiten HELLO-Nachricht, die durch das Clientgerät (120) gesendet wird, wobei die zweite HELLO-Nachricht Fähigkeiten des Clientgeräts (120) umfasst; und
Durchführen eines Aushandelns der Fähigkeiten des Client in der zweiten HELLO-Nachricht und der Fähigkeiten, die durch das Servergerät (100) unterstützt werden, zum Erfassen von gemeinsamen Fähigkeiten des Servergeräts (100) und des Clientgeräts (120), und zum Bestimmen, dass die Verknüpfungsherstellung mit dem Clientgerät (120) abgeschlossen ist;
wobei das Clientgerät (120) ausgebildet ist zum:
Empfangen der ersten HELLO-Nachricht, die durch das Servergerät (100) gesendet wird, wobei die erste HELLO-Nachricht die Fähigkeiten des Servergeräts (100), die ersten ID-Informationen, die durch das Servergerät (100) dem Clientgerät (120) zugeordnet werden, und die zweiten ID-Informationen, die zum Darstellen des Änderungszustands der Informationen der Dienstmodule des Servergeräts ausgebildet sind, bereitstellt,
Bestimmen, gemäß der zweiten ID-Informationen, ob die Erfassungsanfrage zu dem Servergerät (100) gesendet werden soll,
wenn das Clientgerät (120) bestimmt, die Erfassungsanfrage zu dem Servergerät (100) zu senden, Senden der Erfassungsanfrage zu dem Servergerät (100), und
Empfangen, von dem Servergerät (100), der Informationen der Dienstmodule des Servergeräts (100);
wobei das Clientgerät (120) ferner ausgebildet ist zum:
Senden einer Verknüpfungsherstellungsanfrage zu dem Servergerät (100),
Senden einer zweiten HELLO-Nachricht zu dem Servergerät (100), wobei die zweite HELLO-Nachricht Fähigkeiten des Clientgeräts (120) umfasst;
Durchführen eines Aushandelns der Fähigkeiten des Servers in der ersten HELLO-Nachricht und der Fähigkeiten, die durch das Clientgerät (120) unterstützt werden, zum Erfassen von gemeinsamen Fähigkeiten des Clientgeräts (120) und des Servergeräts (100) und zum Bestimmen, dass die Verknüpfungsherstellung mit dem Servergerät (100) abgeschlossen ist;
wobei das Bestimmen, durch das Clientgerät gemäß den zweiten ID-Informationen, ob die Erfassungsanfrage zu dem Servergerät gesendet werden soll, umfasst:
Bestimmen, dass die Erfassungsanfrage gesendet werden soll, wenn das Clientgerät (120) die Verknüpfung mit dem Servergerät (100) das erste Mal herstellt, oder wenn das Clientgerät (120) eine Verknüpfung mit dem Servergerät (100) hergestellt hat und zweite ID-Informationen, die durch das Clientgerät (120) gespeichert sind, von den zweiten ID-Informationen in der ersten HELLO-Nachricht verschieden sind,
Bestimmen, dass die Erfassungsanfrage nicht gesendet werden soll, wenn das Clientgerät (120) die Verknüpfung mit dem Servergerät (100) hergestellt hat und die zweiten ID-Informationen, die durch das Clientgerät (120) gespeichert sind, mit den zweiten ID-Informationen in der ersten HELLO-Nachricht identisch sind.

## Revendications

1. Procédé d'interaction de message HELLO par protocole de configuration de réseau, NETCONF, comprenant :
l'apport (S110), par un serveur, de ses capacités, de premières informations d'identification, ID, allouées à une liaison établie avec un client et de deuxièmes informations ID configurées pour représenter un état de changement d'informations de modules de service du serveur dans un premier message HELLO, et l'envoi du premier message HELLO au client ;
la réception (S120), par le serveur, d'une demande d'acquisition envoyée par le client, l'envoi de la demande d'acquisition étant déterminé par le client selon les deuxièmes informations ID ; et
l'envoi (S130), par le serveur, de ses informations des modules de service au client selon la demande d'acquisition ;
dans lequel avant l'envoi, par le serveur, du premier message HELLO, le procédé comprend la réception (S100), par le serveur, d'une demande d'établissement de liaison envoyée par le client ;
dans lequel après la réception, par le serveur, de la demande d'établissement de liaison envoyée par le client, et avant la réception, par le serveur, de la demande d'acquisition envoyée par le client, le procédé comprend en outre la réception (S111), par le serveur, d'un deuxième message HELLO envoyé par le client, dans lequel le deuxième message HELLO comprend des capacités du client, la réalisation (S112), par le serveur, d'une négociation sur les capacités du client dans le deuxième message HELLO et les capacités prises en charge par le serveur pour acquérir des capacités communes du serveur et du client, et la détermination que cet établissement de liaison avec le client est achevé ;
dans lequel le fait de déterminer, par le client selon les deuxièmes informations ID, s'il faut envoyer la demande d'acquisition au serveur comprend :
la détermination d'envoyer ladite demande d'acquisition lorsque le client établit la liaison avec le serveur la première fois ou lorsque le client a établi une liaison avec le serveur et des deuxièmes informations ID stockées par le client sont différentes des deuxièmes informations ID dans le premier message HELLO ; et
la détermination de ne pas envoyer ladite demande d'acquisition lorsque le client a établi la liaison avec le serveur et les deuxièmes informations ID stockées par le client sont les mêmes que les deuxièmes informations ID dans le premier message HELLO.

2. Procédé selon la revendication 1, dans lequel la demande d'acquisition comprend un identifiant de capacité de la capacité du client à acquérir les informations des modules de service du serveur; et
de façon correspondante, l'envoi, par le serveur, de ses informations des modules de service au client selon la demande d'acquisition comprend : l'envoi, par le serveur, de la totalité de ses informations des modules de service au client ; ou
la demande d'acquisition comprend un identifiant de capacité de la capacité du client à acquérir les informations des modules de service du serveur et des identifiants de modules de service devant être acquis par le client ;
de façon correspondante, l'envoi, par le serveur, de ses informations des modules de service au client selon la demande d'acquisition comprend : l'envoi, par le serveur, d'informations de modules de service correspondant aux identifiants des modules de service devant être acquis par le client, au client.

3. Procédé d'interaction de message HELLO par protocole de configuration de réseau, NETCONF, comprenant :
la réception, par un client, d'un premier message HELLO envoyé par un serveur, dans lequel le premier message HELLO apporte des capacités du serveur, des premières informations d'identification, ID, allouées par le serveur à une liaison établie avec le client et des deuxièmes informations ID configurées pour représenter un état de changement d'informations de modules de service du serveur;
le fait de déterminer, par le client selon les deuxièmes informations ID, s'il faut envoyer une demande d'acquisition au serveur;
lorsque le client détermine d'envoyer la demande d'acquisition au serveur, l'envoi, par le client, de la demande d'acquisition au serveur; et
la réception, par le client en provenance du serveur, des informations des modules de service du serveur;
dans lequel le procédé comprend en outre :
avant la réception, par le client, du premier message HELLO envoyé par le serveur, l'envoi, par le client, d'une demande d'établissement de liaison au serveur ; et
après l'envoi, par le client, de la demande d'établissement de liaison au serveur et avant le fait de déterminer, par le client selon les deuxièmes informations ID, s'il faut envoyer la demande d'acquisition au serveur, l'envoi, par le client, d'un deuxième message HELLO au serveur, dans lequel le deuxième message HELLO comprend des capacités du client, et la réalisation, par le client, d'une négociation sur les capacités du serveur dans le premier message HELLO et les capacités prises en charge par le client pour acquérir des capacités communes du client et du serveur, et la détermination qu'un établissement de liaison avec le serveur est achevé ;
dans lequel le fait de déterminer, par le client selon les deuxièmes informations ID, s'il faut envoyer la demande d'acquisition au serveur comprend :
lorsque le client établit la liaison avec le serveur la première fois, la détermination, par le client, d'envoyer la demande d'acquisition au serveur;
lorsque le client a établi une liaison avec le serveur et des deuxièmes informations ID stockées par le client sont différentes des deuxièmes informations ID dans le premier message HELLO, la détermination, par le client, d'envoyer la demande d'acquisition au serveur;
lorsque le client a établi la liaison avec le serveur et les deuxièmes informations ID stockées par le client sont les mêmes que les deuxièmes informations ID dans le premier message HELLO, la détermination, par le client, de ne pas envoyer la demande d'acquisition au serveur.

4. Procédé selon la revendication 3, dans lequel la demande d'acquisition comprend :
un identifiant de capacité de la capacité du client à acquérir les informations des modules de service du serveur; ou
l'identifiant de capacité de la capacité du client à acquérir les informations des modules de service du serveur et des identifiants de modules de service devant être acquis par le client,
lorsque la demande d'acquisition comprend l'identifiant de capacité de la capacité du client à acquérir les informations des modules de service du serveur, la réception, par le client en provenance du serveur, des informations des modules de service du serveur comprend :
la réception, par le client en provenance du serveur, de la totalité des informations des modules de service du serveur; ou
lorsque la demande d'acquisition comprend l'identifiant de capacité de la capacité du client à acquérir les informations des modules de service du serveur et les identifiants des modules de service devant être acquis par le client, la réception, par le client en provenance du serveur, des informations des modules de service du serveur comprend :
la réception, par le client en provenance du serveur, d'informations de modules de service correspondant aux identifiants des modules de service devant être acquis par le client.

5. Équipement de serveur (100), comprenant: une unité de génération de message (1001), une première unité d'envoi (1002) et une première unité de réception (1003),
dans lequel l'unité de génération de message (1001) est configurée pour apporter des capacités de l'équipement de serveur (100), des premières informations d'identification, ID, allouées à une liaison établie avec un client et des deuxièmes informations ID configurées pour représenter un état de changement d'informations de modules de service de l'équipement de serveur dans un premier message HELLO par protocole de configuration de réseau, NETCONF ;
la première unité d'envoi (1002) est configurée pour envoyer le premier message HELLO au client ;
la première unité de réception (1003) est configurée pour recevoir une demande d'acquisition envoyée par le client, lorsque l'envoi de la demande d'acquisition est déterminé par le client selon les deuxièmes informations ID ; et
la première unité d'envoi (1002) est en outre configurée pour envoyer les informations des modules de service de l'équipement de serveur (100) au client selon la demande d'acquisition ;
dans lequel la première unité de réception (1003) est en outre configurée pour recevoir une demande d'établissement de liaison envoyée par le client, et pour recevoir un deuxième message HELLO par protocole de configuration de réseau, NETCONF, envoyé par le client, dans lequel le deuxième message HELLO comprend des capacités du client ; et
l'équipement de serveur (100) comprend en outre une première unité de négociation (1004), configurée pour réaliser une négociation sur les capacités du client dans le deuxième message HELLO et les capacités prises en charge par l'équipement de serveur pour acquérir des capacités communes d'un serveur et du client, et déterminer qu'un établissement de liaison avec le client est achevé ;
dans lequel le fait de déterminer, par le client selon les deuxièmes informations ID, s'il faut envoyer la demande d'acquisition comprend :
la détermination d'envoyer la demande d'acquisition lorsque le client établit la liaison avec le serveur la première fois, ou lorsque le client a établi une liaison avec l'équipement de serveur (100) et des deuxièmes informations ID stockées par le client sont différentes des deuxièmes informations ID dans le premier message HELLO,
la détermination de ne pas envoyer la demande d'acquisition lorsque le client a établi la liaison avec l'équipement de serveur (100) et les deuxièmes informations ID stockées par le client sont les mêmes que les deuxièmes informations ID dans le premier message HELLO.

6. Équipement de serveur (100) selon la revendication 5, dans lequel la demande d'acquisition comprend un identifiant de capacité de la capacité du client à acquérir les informations des modules de service de l'équipement de serveur (100) ;
de façon correspondante, la première unité d'envoi (1002) est configurée pour envoyer la totalité des informations des modules de service de l'équipement de serveur (100) au client ; ou
la demande d'acquisition comprend un identifiant de capacité de la capacité du client à acquérir les informations des modules de service de l'équipement de serveur (100) et des identifiants de modules de service devant être acquis par le client ;
de façon correspondante, la première unité d'envoi (1002) est configurée pour envoyer des informations de modules de service correspondant aux identifiants des modules de service devant être acquis par le client, au client.

7. Équipement de client (120), comprenant: une deuxième unité de réception (1201), une unité de détermination (1202) et une deuxième unité d'envoi (1203),
dans lequel la deuxième unité de réception (1201) est configurée pour recevoir un premier message HELLO par protocole de configuration de réseau, NETCONF, envoyé par un serveur, dans lequel le premier message HELLO apporte des capacités du serveur, des premières informations d'identification (ID) allouées par le serveur à une liaison établie avec l'équipement de client (120) et des deuxièmes informations ID configurées pour représenter un état de changement d'informations de modules de service du serveur ;
l'unité de détermination (1202) est configurée pour déterminer selon les deuxièmes informations ID, s'il faut déclencher la deuxième unité d'envoi (1203) pour envoyer une demande d'acquisition au serveur;
la deuxième unité d'envoi (1203) est configurée, lorsque l'unité de détermination (1202) détermine de déclencher la deuxième unité d'envoi (1203), pour envoyer la demande d'acquisition au serveur; et
la deuxième unité de réception (1201) est configurée pour recevoir, en provenance du serveur, les informations des modules de service du serveur ;
dans lequel la deuxième unité d'envoi (1203) est en outre configurée pour envoyer une demande d'établissement de liaison au serveur, et pour envoyer un deuxième message HELLO par protocole de configuration de réseau, NETCONF, au serveur, dans lequel le deuxième message HELLO comprend des capacités du client ;
l'équipement de client (120) comprend en outre une deuxième unité de négociation (1204), configurée pour réaliser une négociation sur les capacités du serveur dans le premier message HELLO et les capacités prises en charge par le client pour acquérir des capacités communes de l'équipement de client (120) et du serveur, et déterminer qu'un établissement de liaison avec le serveur est achevé ;
dans lequel l'unité de détermination (1202) est en outre configurée pour :
déterminer d'envoyer la demande d'acquisition au serveur lorsque l'équipement de client (120) établit la liaison avec le serveur la première fois, ou lorsque l'équipement de client (120) a établi la liaison avec le serveur et des deuxièmes informations ID stockées par l'équipement de client (120) sont différentes des deuxièmes informations ID dans le premier message HELLO ;
déterminer de ne pas envoyer la demande d'acquisition au serveur lorsque l'équipement de client (120) a établi la liaison avec le serveur et les deuxièmes informations ID stockées par l'équipement de client (120) sont les mêmes que les deuxièmes informations ID dans le premier message HELLO.

8. Équipement de client (120) selon la revendication 7, dans lequel la demande d'acquisition comprend :
un identifiant de capacité de la capacité de l'équipement de client à acquérir les informations des modules de service du serveur; ou
l'identifiant de capacité de la capacité de l'équipement de client à acquérir les informations des modules de service du serveur et des identifiants de modules de service devant être acquis par l'équipement de client (120),
lorsque la demande d'acquisition comprend l'identifiant de capacité de la capacité de l'équipement de client à acquérir les informations des modules de service du serveur, la deuxième unité de réception est configurée pour :
recevoir, en provenance du serveur, la totalité des informations des modules de service du serveur ; ou
lorsque la demande d'acquisition comprend l'identifiant de capacité de la capacité de l'équipement de client à acquérir les informations des modules de service du serveur et les identifiants des modules de service devant être acquis par l'équipement de client, la deuxième unité de réception est configurée pour :
recevoir, en provenance du serveur, des informations de modules de service correspondant aux identifiants des modules de service devant être acquis par l'équipement de client (120).

9. Système d'interaction de message HELLO par protocole de configuration de réseau, NETCONF, comprenant : un équipement de serveur (100) et un équipement de client (120),
dans lequel l'équipement de serveur (100) est configuré pour :
apporter des capacités de l'équipement de serveur (100), des premières informations d'identification, ID, allouées à l'équipement de client (120) avec lequel une liaison est établie et des deuxièmes informations ID configurées pour représenter un état de changement d'informations de modules de service de l'équipement de serveur (100) dans un premier message HELLO, envoyer le premier message HELLO à l'équipement de client,
recevoir une demande d'acquisition envoyée par l'équipement de client (120), lorsque l'envoi de la demande d'acquisition est déterminé par l'équipement de client selon les deuxièmes informations ID, et
envoyer les informations des modules de service de l'équipement de serveur (100) à l'équipement de client (120) selon la demande d'acquisition ;
dans lequel l'équipement de serveur (100) est en outre configuré pour: recevoir une demande d'établissement de liaison envoyée par l'équipement de client (120),
recevoir un deuxième message HELLO envoyé par l'équipement de client (120), dans lequel le deuxième message HELLO comprend des capacités de l'équipement de client (120) ; et
réaliser une négociation sur les capacités du client dans le deuxième message HELLO et les capacités prises en charge par l'équipement de serveur (100) pour acquérir des capacités communes de l'équipement de serveur (100) et de l'équipement de client (120), et déterminer qu'un établissement de liaison avec l'équipement de client (120) est achevé ;
l'équipement de client (120) est configuré pour :
recevoir le premier message HELLO envoyé par l'équipement de serveur (100), dans lequel le premier message HELLO apporte les capacités de l'équipement de serveur (100), les premières informations ID allouées par l'équipement de serveur (100) à l'équipement de client (120) et les deuxièmes informations ID configurées pour représenter l'état de changement d'informations des modules de service de l'équipement de serveur,
déterminer, selon les deuxièmes informations ID, s'il faut envoyer la demande d'acquisition à l'équipement de serveur (100),
lorsque l'équipement de client (120) détermine d'envoyer la demande d'acquisition à l'équipement de serveur (100), envoyer la demande d'acquisition à l'équipement de serveur (100), et
recevoir, en provenance de l'équipement de serveur (100), les informations des modules de service de l'équipement de serveur (100) ;
dans lequel l'équipement de client (120) est en outre configuré pour :
envoyer une demande d'établissement de liaison à l'équipement de serveur (100),
envoyer un deuxième message HELLO à l'équipement de serveur (100), dans lequel le deuxième message HELLO comprend des capacités de l'équipement de client (120) ;
réaliser une négociation sur les capacités du serveur dans le premier message HELLO et les capacités prises en charge par l'équipement de client (120) pour acquérir des capacités communes de l'équipement de client (120) et de l'équipement de serveur (100), et déterminer qu'un établissement de liaison avec l'équipement de serveur (100) est achevé ;
dans lequel le fait de déterminer, par l'équipement de client selon les deuxièmes informations ID, s'il faut envoyer la demande d'acquisition à l'équipement de serveur comprend :
la détermination d'envoyer la demande d'acquisition lorsque l'équipement de client (120) établit la liaison avec l'équipement de serveur (100) la première fois, ou lorsque l'équipement de client (120) a établi une liaison avec l'équipement de serveur (100) et des deuxièmes informations ID stockées par l'équipement de client (120) sont différentes des deuxièmes informations ID dans le premier message HELLO,
la détermination de ne pas envoyer la demande d'acquisition lorsque l'équipement de client (120) a établi la liaison avec l'équipement de serveur (100) et les deuxièmes informations ID stockées par l'équipement de client (120) sont les mêmes que les deuxièmes informations ID dans le premier message HELLO.
